Europäisches Patentamt

(19) European Patent Office

Office européen des brevets

(11) Veröffentlichungsnummer: **0 056 118**
**B1**

(12) **EUROPÄISCHE PATENTSCHRIFT**

(45) Veröffentlichungstag der Patentschrift:
19.03.86

(51) Int. Cl.⁴: **A 01 B 73/00**

(21) Anmeldenummer: 81110312.6

(22) Anmeldetag: 10.12.81

(54) Zusammenfaltbares und auffaltbares Gerät oder Werkzeugträger für landwirtschaftliche Maschinen.

(30) Priorität: 18.12.80 US 217717

(43) Veröffentlichungstag der Anmeldung:
21.07.82 Patentblatt 82/29

(45) Bekanntmachung des Hinweises auf die Patenterteilung:
19.03.86 Patentblatt 86/12

(84) Benannte Vertragsstaaten:
DE FR GB

(56) Entgegenhaltungen:
US - A - 1 715 063
US - A - 4 191 260
US - A - 4 232 747

(73) Patentinhaber: DEERE & COMPANY, 1 John Deere Road, Moline Illinois 61265 (US)

(72) Erfinder: Jensen, Thomas Carl, 304 N.W. Beechwood, Ankeny Iowa 50021 (US)
Erfinder: Stevens, Phillip Eugene, 409 S.E. 5th, Ankeny Iowa 50021 (US)
Erfinder: Landry, Henry James, Jr., 1006 N.W. 3rd St., Ankeny Iowa 50021 (US)

(74) Vertreter: Fricke, Joachim, Dr. et al, Dr. R. Döring, Dr. J. Fricke, Patentanwälte Josephspitalstrasse 7, D-8000 München 2 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein zusammenfaltbares und auffaltbares Gerät oder Werkzeugträger für land wirtschaftliche Maschinen mit einem horizontal und quer zur Fahrtrichtung angeordnetem Trägerhauptabschnitt für Werkzeuge, an dessen Enden im Abstand oberhalb der den Trägerhauptabschnitt enthaltenden horizontalen Ebene horizontale Schwenkachsen und jeweils zwischen einer ausgeschwenkten Arbeitsstellung und einer demgegenüber um mehr als 90° geschwenkten Transportstellung über dem Trägerhauptabschnitt bewegbare Trägerausleger mit daran befestigten Werkzeugen vorgesehen sind, deren Gesamtbereite größer ist als die Breite des Trägerhauptabschnittes, und bei dem Schwenkantriebe jeweils zwischen dem Trägerhauptabschnitt und jedem Trägerausleger vorgesehen sind.

Aus der US-A- 17 15 063 ist ein zusammenfaltbarer und auffaltbarer Werkzeugträger bekannt, an dem die Werkzeuge lose und beweglich angehängt sind. Für den Transport werden die Werkzeuge ausgehängt und der Werkzeugträger in Form eines langgestreckten faltbaren Balkens oder dgl. wird um Scharniere, die oberhalb der Ebene des Werkzeugträgers liegen, zusammengefaltet, so daß die außenliegenden Faltabschnitte über dem mittleren Abschnitt des Werkzeugträgers übereinander zu liegen kommen. Diese Art der Zusammenfaltung läßt sich jedoch nicht bei zusammenfaltbaren und auffaltbaren Geräten oder Werkzeugträgern mit den Merkmalen des Oberbegriffs des Anspruchs 1 verwenden, da bei diesen die Werkzeuge, die erheblich von der Ebene des Werkzeugträgers vorspringen, an diesem Träger befestigt sind und mit diesem eine starre Einheit bilden.

Während der Werkzeugträger nach der US-A-17 15 063 mittels Hand zusammengefaltet wird, ist es auch bekannt den Werkzeugträger mittels Druckmittelzylinder mechanisch in eine zusammengefaltete Transportstellung zu bringen (vgl. US-A-42 32 747). Bei dieser bekannten Anordnung ist der Druckmittelzylinder mit einem Ende am mittleren Abschnitt des Werkzeugträgers um eine zur Fahrtrichtung parallele horizontale Achse schwenkbar gelagert, während das freie Ende der Kolbenstange an dem mittleren Gelenkpunkt einer kniehebelartigen Lenkeranordnung angelenkt ist. Das freie Ende des einen Lenkers ist an dem äußeren umzufaltenden Abschnitt des Werkzeugträgers fest angelenkt, während das freie Ende des anderen Lenkers in einer zur Ebene des mittleren Werkzeugträgerabschnittes parallelen Schlitzführung geführt ist. Die abzufaltenden äußeren Abschnitte des Werkzeugtrigers lassen sich hierbei nur in eine Faltstellung bringen, in der sie von ihrer Anlenkstelle an dem mittleren Abschnitt des Werkzeugträgers aus zu dessen Mitte schräg hin ansteigend geneigt sind. Eine ähnliche Anordnung zeigt die US-A-37 97 580. Bei dieser sind die beiden Lenker des kniegelenkartigen Lenkersystems jeweils fest an dem mittleren Trägerabschnitt und an dem anzufaltenden Trägerabschnitt angelenkt, während an deren gemeinsamen Gelenkpunkt eine Gleitführung für den Gelenkpunkt vorgesehen ist. Der Druckmittelzylinder greift auf halber Länge an dem an dem mittleren Werkzeugträgerabschnitt angelenkten Lenker an. Auch hier liegt die zur Fahrtrichtung parallele Schwenkachse zwischen den beiden Abschnitten des Werkzeugträgers im Abstand oberhalb der Ebene des mittleren Abschnittes. Auch bei dieser bekannten Anordnung lassen sich die beiden äuMeren Werkzeugträgerabschnitte lediglich in eine zusammengefaltete Stellung schwenken, in der sie beide jeweils von ihren Schwenkachsen aus nach oben ansteigend übereinander zu liegen kommen. Dies gilt insb. für den Fall, daM die Länge der abzufaltenden Werkzeugträgerabschnitte größer als die halbe Länge des mittleren Werkzeugträgerabschnittes ist.

Es ist Aufgabe der Erfindung ein zusammenfaltbares und auffaltbares Gerät oder Werkzeugträger für landwirtschaftliche Maschinen mit den Merkmalen des Oberbegriffs des Anspruchs 1 so weiterzubilden, daß dieses trotz großer Arbeitsbreite noch kompakter als bisher zusammenfefaltet werden kann, und zwar auch dann, wenn an dem Werkzeugträger in der Arbeitsstellung nach unten vorspringende bodenbearbeitungswerkzeuge oder dgl. von vorbestimmter Länge angeordnet sind, wobei eine sichere Verschwenkung des im zusammengefalteten Zustand zuoberst liegenden Trägerauslegers gewährleistet werden soll.

Diese Aufgabe wird dadurch gelöst, daß in der Transportstellung die beiden Trägerausleger mit jeweils nach oben weisenden Werkzeugen übereinander in etwa paralleler Position zueinanderund zu dem Trägerhauptabschnitt angeordnet sind, daß der Schwenkantrieb für den einen Trägerausleger so ausgebildet ist, daM er diesen Trägerausleger während des Bewegens in die Transportstellung über die nach oben weisenden Werkzeuge des anderen Trägerauslegers hebt, und daß seine Schwenkachse um einen vorbestimmten vertikalen Abstand über einer die Schwenkachse des anderen Trägerauslegers enthaltenden horizontalen Ebene angeordnet ist, wobei der Abstand der Schwenkachse von der Ebene des Trägerhauptabschnittes wenigstens gleich der Hälfte des Abstandes ist, in dem sich in der Transportstellung die Werkzeuggpitzen des anderen Auslegers über der Ebene des Trägerhauptabschnittes befinden.

Aufgrund dieser Anordnung können die beiden Trägerausleger auch dann wenn sie eine Gesamtbereite aufweisen, die wesentlich größer ist als die Breite des Trägerhauptabschnittes und auch dann, wenn an ihnen in der Arbeitsstellung weit nach unten vorspringende Werkzeuge befestigt sind, in eine kompakte Transportstellung gebracht werden, in der beide Trägerausleger mit jeweils nach oben weisenden Werkzeugen übereinander in etwa paralleler Position zueinander und zu dem Trägerhauptabschnitt angeordnet sind. Dies gibt sowohl der Höhe nach als auch der Breite nach eine außerordentlich kompakte Anordnung, die den Transport des Gerätes oder Werkzeugträgers wesentlich erleichtert. Dazu trägt auch bei, daM aufgrund der Anordnung der Schwerpunkt des zusammengefalteten Gerätes oder Werkzeugträgers vergleichsweise tief liegt. Mit nur zwei Trägerauslegungen läßt sich zusammen mit dem Trägerhauptabschnitt dennoch eine sehr große Arbeitsbreite erzielen. Aufgrund der Anordnung ist es auch nicht erforderlich, die Werkzeuge von den Werkzeugträgern abzumontieren, um die Werkzeugträger zusammenfalten zu können.

Vorteilhafterweise ist dem Schwenkantrieb für den Trägerausleger mit der höherliegenden Schwenkachse ein Schwenkgestänge mit einer Verbindungsstange zugeordnet, die mit einem Ende an einem in der Arbeitsstellung des Auslegers nach oben ragenden Armes des Trägerauslegers und mit dem anderen Ende an dem zugewandten Ende eines Druckmittelzylinders angelenkt ist, wobei eine Führung vorgesehen ist, mittels der das mit der Verbindungsstange verbundene Ende des Druckmittelzylinders in Abhängigkeit vom Ausfahren dieses Zylinders zwangsweise anhebbar ist. Aufgrund dieser Ausbildung kann der Druckmittelzylinder den Trägerausleger mit der höherliegenden Schwenkachse zuverlässig während des Schwenkens aus der Arbeitsstellung in die Transportstellung auf die Höhe anheben, die erforderlich ist, damit dieser Trägerausleger in eine horizontale Stellung oberhalb des anderen Trägerauslegers und der daran befestigten und nach oben weisenden Werkzeuge verschwenkt werden kann. Dabei gewährleistet diese Anordnung, daß während des gesamten Schwenk- und Faltvorganges der zugehörige Druckmittelzylinder nur wenig aus seiner in der Transportstellung des Gerätes oder Werkzeugträgers zu diesem etwa parallelen Stellung nach oben auswandert. Außerdem wird durch die Führung der Druckmittelzylinder entlastet. Außerdem wirkt die Verbindungsstange 122 in dem Schwenkbereich zwischen der Transportstellung des Trägerauslegers und einer senkrechten Zwischenstellung als zweiarmiger Hebel, der im Bereich zwischen seinen Enden sich in Höhe der Schwenkachse des Trägerauslegers gestellfest abstützen kann.

Die Erfindung wird nachfolgend anhand schematischer Zeichnungen an mehreren Ausführungsbeispielen näher erläutert.

Es zeigen:

Figur 1 eine rückwrätige Ansicht eines zusammenfaltbaren und auffaltbaren Werkzeugträgers gemäß der Erfindung in seiner Arbeitsstellung, wobei als Werkzeuge eine Vielzahl von Spitzpflugscharen dargestellt sind.

Figur 2 in ähnlicher Dargesellung wie Fig. 1 den Werkzeugträger in einer Zwischenstellung zwischen der Arbeitsstellung nach Fig. 1 und der Transportstellung.

Fig. 3 in ähnlicher Darstellung wie Fig. 1 einen Werkzeugträger gemäß der Erfindung, wobei beide Trägerausleger in eine horizontale Transportstellung über dem Trägerhauptabschnitt zusammengefaltet sind,

Fig. 4 eine Seitenansicht der Transportstellung nach Fig. 3 mit Blickrichtung in Richtung der Pfeile 4-4 der Fig. 3,

Fig. 5 eine perspektivische Ansicht von hinten auf den linken gelenkigen Verbindungsbereich zwischen Trägerhauptabschnitt und Ausleger des Werkzeugträgers nach Fig. 1,

Fig. 6 im größeren Maßstab eine rückwärtige Ansicht des Verbindungsabschnittes nach Fig. 5,

Fig. 7 im Ausschnitt eine Ansicht der Anordnung nach Fig. 6 mit Blickrichtung entlang der Pfeile 7-7 der Fig. 6,

Fig. 8 ein hydraulisches Schaltschema eines hydraulischen Steuerkreises für die Antriebe des Werkzeugträgers nach Fig. 1 bis 7,

Fig. 9 schematisch eine Ventil-Folgeschalteinrichtung für die Anordnung nach Fig. 8 und

Fig.10 eine abgewandelte Ausführungsform der Ventil-Folgeschalteinrichtung, die ebenfalls in dem hydraulischen Kreis nach Fig. 8 verwendet werden kann.

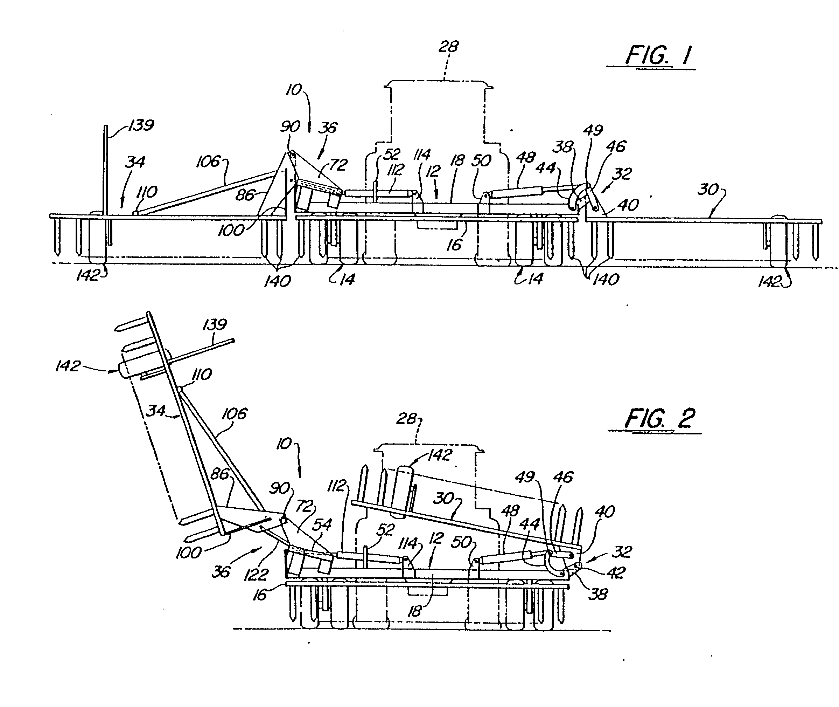

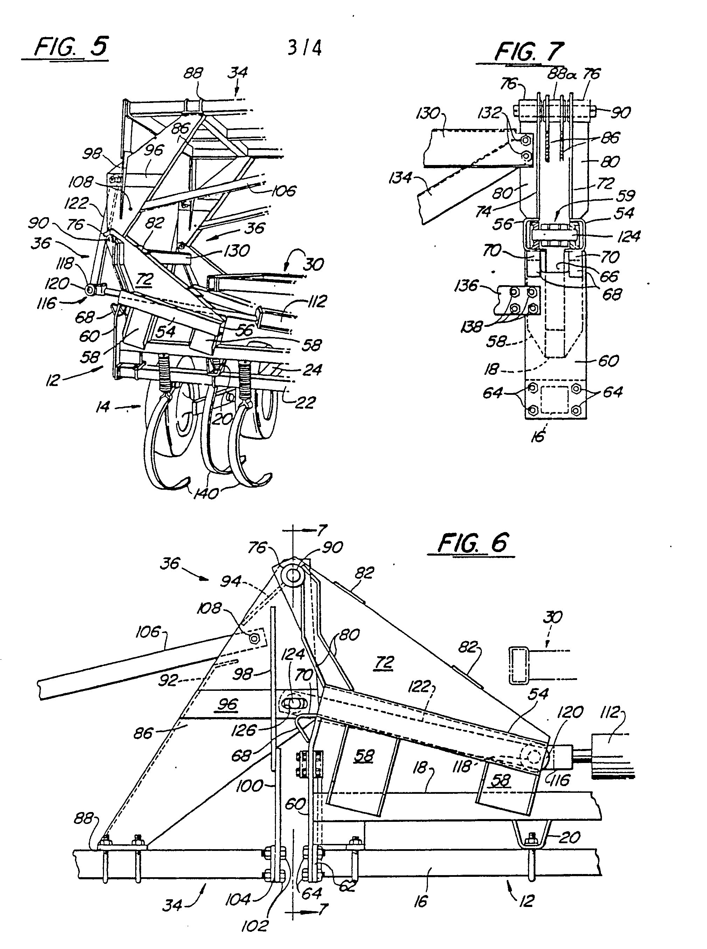

In den Fig. 1 bis 7 ist ein Werkzeugträger 10 gezeigt. Dieser weist einen Trägerhauptabschnitt 12 auf, der in senkrechter Richtung beweglich über Bodenkontakträder 14 in üblicher Weise abgestützt ist. Der Trägerhauptabschnitt 12 umfaßt einen unteren Werkzeugrahmen 16 und einen oberen Tragrahmen 18, welche durch Halter 20 nach Fig. 5 und 6 oder andere geeignete Verbindungsmittel miteinander verbunden sind. Der Werkzeugrahmen 16 umfaßt querverlaufende Träger 22 von Kastenprofil, die an entsprechenden, in parallel zur Fahrtrichtung verlaufenden Trägern 24 angeschweißt sind, um so eine allgemein rechteckförmige Rahmenkonstruktion zu bilden. Hubarme 26 (Fig.4) erstrecken sich von diesem Rahmen nach vorn und sind über einen nicht dargestellten Verbindungsabschnitt an dem Traggestänge eines Ackerschleppers 28 befestigt. Zwar wird der Werkzeugträger am Beispiel eines Spitzpfluges beschrieben, es ist jedoch ersichtlich, daß der Werkzeugträger auch für andere Geräte oder Werkzeuge verwendet werden kann, d.h. auch in Verbindung mit direkt am Ackerschlepper montierten Geräten oder Trägern.

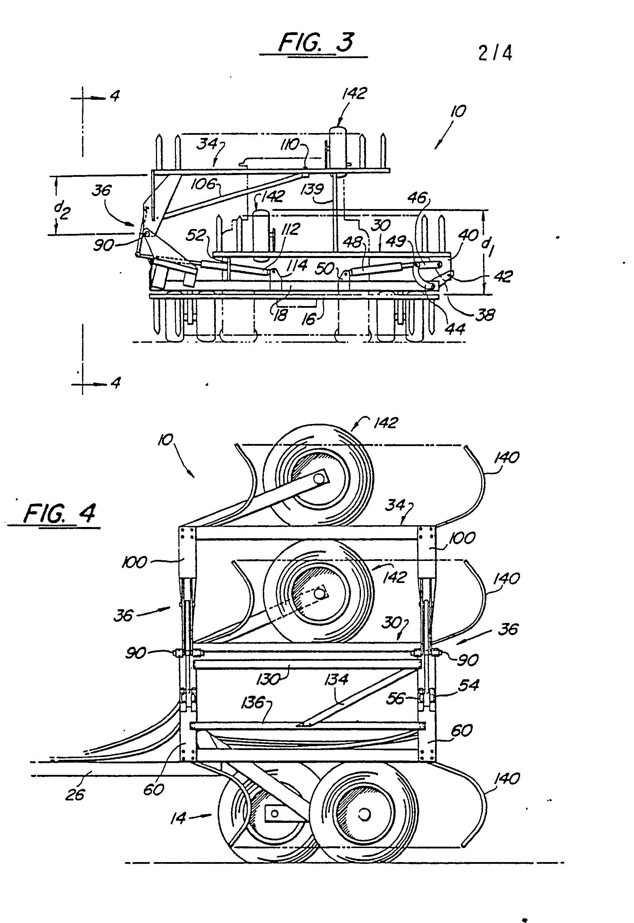

Ein erster Trägerauslegerrahmen 30 ist am Trägerhauptabschnitt 12 über zwei um 180° schwenkbare Scharnierteile 32 verbunden. Ein zweiter Trägerausleger 34 ist ebenfalls durch zwei höherliegende und über 180° schwenkbare Scharnierteile 36 mit dem Trägerhauptabschnitt 12 verbunden. Die Scharniere 32 sind üblich und entsprechen dem im Handel erhältlichen Modell 1610 der Patentinhaberin. Jedes der beiden Scharniere 32 umfaßt nach außen und nach oben gerichtete Seitenplatten 38 des Trägerhauptabschnittes 12. In der Arbeitsstellung nach oben gerichtete Seitenplatten 40 sind auch an dem ersten Trägerausleger 30 vorgesehen. Die Seitenplatten 38 und 40 sind oberhalb der horizontalen, den Trägerhauptabschnitt 12 enthaltenden Ebene und außerhalb des Trägerhauptabschnittes 12 durch parallel zur Fahrtrichtung verlaufende Gelenkzapfen 42 miteinander verbunden, welche gemeinsam die horizontale Schwenkachse für den Trägerausleger 30 bilden. Lenkerpaare 44 und 46 sind mit dem Trägerhauptabschnitt 12 bzw. den Seitenplatten 40 gelenkig verbunden. Außerdem sind sie gelenkig miteinander und mit dem Stangenende eines hydraulischen Arbeitszylinders 48 über einen Schwenkstift 49 verbunden, der sich durch die beiden Lenkerpaare und das Stangenende erstreckt. Das Verankerungsende des Arbeitszylinders 48 ist über einen Halter 50 an dem Tragrahmen 18 befestigt. Die Scharniere 32 stehen allgemein in Querfluchtung mit Scharnieren 36 (vgl. Fig.4). Die Arbeitszylinder 48 befinden sich in der maximal ausgefahrenen Stellung (vgl. Fig.1), wenn der Trägerausleger 30 sich in der horizontalen Arbeitsstellung nach Fig. 1 befindet. Wenn der Arbeitszylinder 48 eingezogen wird, werden die gelenkig miteinander verbundenen Enden der Lenker 44 und 46 in der Zeichnung nach links gezogen. Dadurch wird der Trägerausleger 30 aus der horizontalen Arbeitsstellung in eine zusammengefaltete Transportstellung (Fig.3) um 180° verschwenkt. Er kommt dabei oberhalb des Trägerhauptabschnittes 12 und parallel zu diesem zu liegen. Der Gelenkzapfen 42 ist in senkrechter Richtung versetzt gegenüber der den Trägerhauptabschnitt 12 und (in der Arbeitsstellung) den Trägerausleger enthaltenden horizontalen Ebene, und zwar ausreichend weit, so daß der Trägerausleger 30 in die Stellung oberhalb des Trägerhauptabschnittes geschwenkt werden kann, ohne mit dem Tragrahmen 18 in Konflikt zu gelangen. Zwei nach oben als Anschlag ragende Stützen 52 sind fest am Trägerhauptabschnitt 12 vorgesehen und verhindern, daß der Trägerausleger 30 über die 180°-Stellung hinaus gefaltet werden kann. Sie bilden gleichzeitig eine Abstützung des Trägerauslegers 30 während des Transportes und beim abgestellten Gerät.

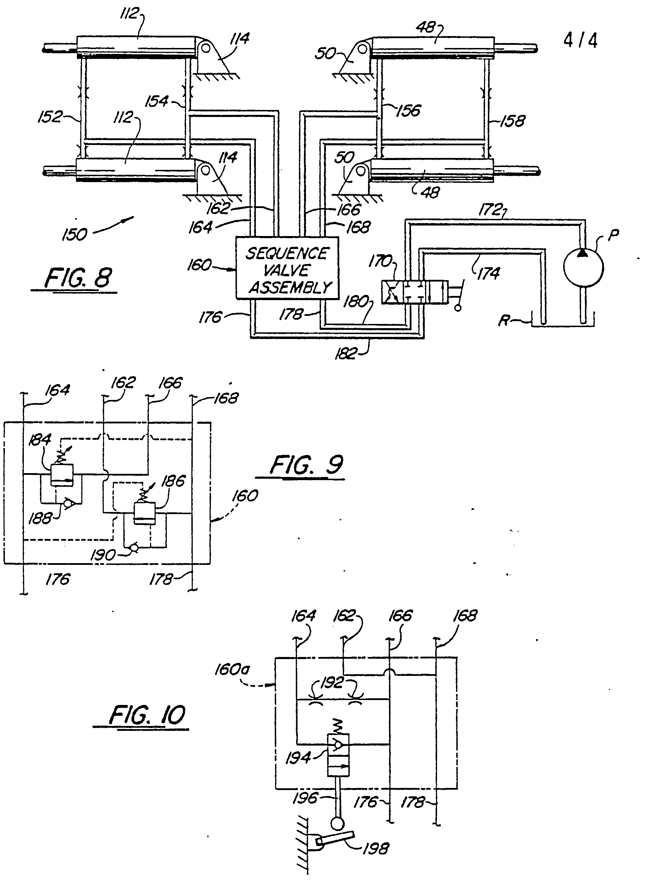

Die Scharniere 36, die zum Abstützen des zweiten Trägerauslegers 34 am Trägerhauptabschnitt 12 dienen, sind im wesentlichen gleich ausgebildet, so daß nur eines im Detail beschrieben zu werden braucht. Jedes Scharnier 36 umfaßt zwei im Abstand angeordnete kanalförmige Elemente 54 und 56, die oberhalb des Trägerhauptabschnittes 12 durch U-förmige Stützteile 58 unterstützt werden, welche ihrerseits an dem Tragrahmen 18 angeschweißt sind. Die Teile 54 und 56 sind in Richtung aufeinander zu offen (Fig.7). Sie bilden eine in Querrichtung langgestreckte Rollenführung oder einen Kanal, der bei 59 geschlitzt ist. Der Kanal verläuft unter einem Winkel von den inneren Stützen 58 zu dem äußersten Ende schräg nach oben, welches oberhalb des Endes des Trägerhauptabschnittes 12 liegt. Eine senkrechte Platte 60 ist mit der Stirnplatte 62 des Trägerhauptabschnittes durch Schrauben 64 verbunden und zur Unterstützung der kanalförmigen Elemente 54 und 56 an diesen am oberen Ende der Führung angeschweißt. Ein senkrechter Schlitz 66 verläuft in der Platte zwischen den Gliedern 54 und 56 in Fluchtung mit dem Schlitz 59. Lageraugen 68 sind an beiden Seiten des vertikalen Schlitzes 66 angeschweißt und umfassen nach oben gerichtete Flächen 70, welche eine Schrägfläche bilden, die eine Führung zu der durch die Glieder 54 und 56 gebildeten Rollenführung bilden.

Scharnierseitenplatten 72 und 74 sind an den Gliedern 54 und 56 angeschweiüt und erstrecken sich von diesen nach oben. Die äußersten Ende dieser Seitenplatten 72,74 erstrecken sich nach außen gerade bis zu einem Punkt jenseits der Ebene der senkrechten Platte 60 (Fig.6) und unterstützen die Scharnierlager 76. Verstärkungsrippen 80 sind an den Seitenplatten 72 und 74 und den Gliedern 54 und 56 angeschweißt sowie an den entsprechenden Lagern 76, um das Scharnier zu versteifen. Abstandsplatten 82 sind zur Aufrechterhaltung eines gewünschten Abstandes zwischen den Seitenplatten 72 und 74 an diesen angeschweißt.

Jedes Scharnier 36 umfaßt zwei parallele Seitenplatten 86, die üer einen Halter 88 mit dem zweiten Trägerausleger 34 verbunden sind. Die Platten 86 erstrecken sich nach oben und nach rechts (in der Darstellung nach Fig.6). Die äußersten Enden der Platten liegen zwischen den Seitenplatten 72. Eine Buchse 88 a ist zwischen den Platten 86 (Fig.7) angeordnet, und zwar in Fluchtung mit den Scharnierlagern 76. Ein Scharnierstift 90 erstreckt sich parallel zur Fahrtrichtung durch das Scharnierlager 76 und die Buchse 88a,Stirnplatten 92 und 94 sind zur Abstandshaltung an den Platten 86 angeschweißt. Querverlaufende Verstärkungsstangen 96 sind an den Platten 86 angeschweißt und erstrecken sich quer zu den kanalförmigen Gliedern 54 und 56, wenn sich der Trägerausleger in der in Fig. 6 gezeigten Stellung befindet. Senkrechte Verstärkungsstangen 98 sind an der Außenseite jeder Platte 86 angeschweißt. Eine senkrechte Platte 100 ist durch Bolzen 102 an der Stirnplatte 104 des Trägerauslegers 34 befestigt. Die Platte erstreckt sich Von dem Ausleger 34 zum Boden der Platten 86, wo sie an den senkrechten Verstärkungsstangen 98 angeschweißt ist. Eine diagonale Verstrebung 106 ist mit einem Ende im Bereich zwischen dem oberen Abschnitt der Seitenplatten 86 durch Bolzen 108 befestigt. Das andere Ende der Strebe 106 ist durch Halter 110 an dem Ausleger 34 befestigt, und zwar nahe seinem außenliegenden Ende.

Das Verankerungsende eines hydraulischen Arbeitszylinders 112 ist durch Halter 114 an dem Tragrahmen 18 des Trägerhauptabschnittes befestigt. Das Kolbenstangenende des Zylinders 112 trägt eine Gabel 116. Ein Zylinderstift 118 ragt durch die Gabel 112 und unterstützt beiderseits der Gabel Rollen 120. Die Rollen 120 haben einen gegenseitigen Abstand, so daß sie durch die untere Innenfläche der zugehörigen kanalförmigen Glieder 54 und 56 nach Fig. 6 unterstützt werden können. Der Abstand zwischen den oberen und unteren inneren Flächen der Glieder 54 und 56 ist geringfügig größer als der Durchmesser der Rollen 120. Wenn der Zylinder 112 ausgefahren wird (nach links aus der Stellung nach Fig.6) folgen die Rollen 120 dem geschlitzten Kanal, der durch die Glieder 54 und 56 gebildet wird. Dadurch wird das Stangenende des Zylinders 112 gezwungen, in bezug auf den Trägerhauptabschnitt 12 nach oben zu wandern. Der Schlitz zwischen den Gliedern 54 und 56 gestattet es, daß die Zylinderstange sich über die Oberseite der Glieder anhebt, wenn der Zylinder 112 ausgefahren wird (vgl. Fig.2).

Eine in Querrichtung verlaufende Verbindungsstange 122 (Fig.6) ist am innersten Ende der Gabel 112 zwischen den Rollen 120 durch den Stift 118 angelenkt. Das entgegengesetzte Ende der Verbindungsstange 122 erstreckt sich zwischen die Seitenplatten 86 und ist an diesen durch einen Anlenkstift 124 schwenkbar befestigt. Der Stift 124 ist unterhalb des Scharnierstiftes 90 (Fig.6) in querverlaufenden Schlitzen 126 in den Seitenplatten 86 und den querverlaufenden Verstärkungsstangen 96 unterstützt, so daß die Verschwenkung des Auslegers um den Scharnierzapfen 90 ermöglicht wird, wenn der Zylinder 112 eingefahren wird. Wenn der Zylinder 112 ausgefahren wird, und zwar aus der Stellung nach Fig. 6, bewegt sich die Verbindungsstange 112 nach links und schwenkt den Trägerausleger 34 um den Scharnierzapfen 90 (Fig.2). Die Gabel 116 wird durch die Rollen 120 und die Glieder 54 und 56 zwangsgeführt, und zwar derart, daß die Gabel sich entlang dem Kanal schräg nach oben bewegt, wodurch eine mehr direkte Fluchtungsstellung zwischen der Stange 122 und dem Zylinder 112 aufrechterhalten wird, wenn der Zylinder ausgefahren wird. Der Kanal trägt außerdem dazu bei, die Fluchtung der gelenkigen Verbindungteile während des Auffaltens und Zusammenfaltens aufrechtzuerhalten.

Wenn der Zylinder 112 ausgefahren wird und der Trägerausleger 34 über etwa 90° aus der horizontalen Arbeitsstellung nach Fig. 1 herausgeschwenkt wird, führt die Schwerkraft dazu, daß der Ausleger in Richtung nach rechts vom Scharnierzapfen 90 verschoben wird, so daß sich die Verbindungsstange 112 im Zugspannungszustand statt im Druckspannungszustand befindet. Die Mitte der Stange 112 liegt dabei an der Buchse 88a zwischen den Seitenplatten 86 an. Wenn der Zylinder 112 weiter ausgefahren wird, werden die Rollen 120 nicht mehr länger durch die Glieder 54 und 56 zwangsgeführt. Die Verbindungsstange 122 schwenkt im Uhrzeigersinn (Fig.5) um die Buchse 88a und gestattet es dem Ausleger 34, in die um 180° gefaltete Transportstellung zu schwenken (Fig.3). Das Einziehen des Zylinders 112 schwenkt die Verbindungsstange 122 im Gegenuhrzeigersinn um die Buchse 88a um den Trägerausleger 34 nach oben um den Scharnierzapfen 90 zu schwenken. Die Augen 68 führen die Rollen 120 in den Kanal, der durch die Glieder 54 und 56 gebildet wird. Wenn die Schwerkraftmitte des Rahmens nach außen verschoben wird in bezug auf den Schwenkzapfen 90, wird die Verbindungsstange 122 zwischen den Rollen 120 und dem Stift 124 unter Spannung gehalten. Ein fortgesetztes Einfahren des Zylinders 112 gestattet es, daß der Trägerausleger im Gegenuhrzeigersinn in die Arbeitsstellung nach Fig. 1 und 6 verschwenkt.

Zwei identisch arbeitende Scharniere 36 werden ausgefahren und zurückgezogen als Einheit, und zwar durch ein hydraulisches Folgesystem, das im Detail weiter unten beschrieben wird. Die Scharniere 36 sind durch einen oberen, parallel zur Fahrtrichtung verlaufenden Strebenteil 130 an den zugehörigen Verstärkungsrippen 80 durch Bolzen 132 (Fig.7) befestigt. Eine Diagonalstrebe 134 ist mit einem Ende an dem rückwärtigen Scharnier 36 durch Bolzen 132 befestigt. Das entgegengesetzte Ende ist am unteren, sich in parallel zur Fahrtrichtung erstreckenden Strebenteil 136 befestigt, das mit den entgegengesetzten Enden durch Bolzen 138 an der senkrechten Stirnplatte 60 befestigt ist. Aufrechte Stützen 139 sind an dem zweiten Trägerausleger 34 befestigt, um sich an den zuerst eingefalteten Ausleger 30 anzulegen (Fig.3). Dadurch wird verhindert, daß der zweite Trägerausleger 34 über einen Winkel von 180° hinaus geschwenkt wird, wenn der Werkzeugträger in die Transportstellung überführt wird. Die Stützen 52 und 139 sorgen dafür, daß die beiden Trägerausleger oberhalb und parallel zum Trägerhauptabschnitt 12 während des Transportes und der Abstellung des Gerätes gestützt werden.

Bodenbearbeitungswerkzeuge 140 werden an dem unteren Rahmenteil 16 sowie an den Trägerauslegern 30 und 34 unterstützt. Eine Bodenradanordnung 142 ist jeweils an den Trägerauslegern 30 und 34 angeordnet, um die Ausleger zu stützen und eine Tiefenkontrolle für diese zu ermöglichen. In der bevorzugten Ausführungsform werden die Radanordnungen 14 und 142 durch in Reihe liegende Zylinder hydraulisch betätigt, wie dies in der US-PS 3 666 284 beschrieben ist. Dadurch erhält man eine entsprechende Tiefensteuerung und die Möglichkeit, die Werkzeuge zwischen einer Eingriffsstellung und einer Nichteingriffsstellung (Fig.1) zu heben bzw. zu senken. Die Scharniere 32 und 36 gestatten eine begrenzte Verschwenkung der Trägerausleger 30 und 34, so daß der ganze Werkzeugträger flexibel auch über unebenes Gelände in der Bearbeitungsstellung bewegt werden kann.

Die Werkzeuge 140 und die Bodenabstützanordnungen 142 für den Ausleger 30 erstrecken sich bis über die Ebene des Rahmenteils 60 um einen Abstand $d_1$ (Fig.3), wenn der Ausleger sich in der Transportstellung befindet. Die Achse des Scharnierzapfens 90 des Scharniers 36 ist um einen Abstand $d_2$ nach oben gegenüber dem Rahmen versetzt. Der Abstand $d_2$ wird wenigstens gleich 1/2 $d_1$ gewählt, so daß der Trägerausleger 34 so weit angehoben werden kann, daß er oberhalb der nach oben ragenden Enden der Werkzeuge 140 und der Radanordnungen 142 zu liegen kommt, wenn er aus der Bearbeitungsstellung nach Fig. 1 in die Transportstellung nach Fig. 3 um 180° geschwenkt wird.

Das hydraulische Steuersystem 150 nach Fig. 8 zum Zusammenfalten und Auffalten der Trägerausleger 30 und 34 umfaßt hydraulische Leitungen 152 und 154, die stangenseitig und verankerungsseitig jeweils mit den Zylindern 112 verbunden sind. Weiterhin sind hydraulische Leitungen 156 und 158 vorgesehen, die mit den Verankerungsenden bzw. den stangenseitigen Enden der Zylinder 48 verbunden sind. Eine Folgeventilanordnung 160 weist zwei Ausgangsanschlüsse 162,164,166 und 168 auf, an die die Leitungen 154,152,156 und 158 jeweils angeschlossen sind. Ein übliches Strömungssteuerventil 170 ist mit einer Druckmittelquelle P und einem Sumpf R über hydraulische Leitungen 172,174 verbunden. Das Ventil 170 ist mit den Einlaßstutzen 176 und 178 über Leitungen 180,182 verbunden.

Die Folgeventileinrichtung 160 steuert die Strömung zu den Arbeitszylinders 48 und 112, um sicherzustellen, daß der Ausleger 30 seine zusammengefaltete Stellung erreicht vor dem Trägerausleger 34, so daß die beiden Ausleger nicht miteinander beim Zusammenfalten in Konflikt geraten. Wenn die Trägerausleger 30 und 34 aus der in Fig. 3 gezeigten Transportstellung aufgefaltet werden, sorgt die Ventileinrichtung 160 dafür, daß der Ausleger 34 sich aus der Schwenkbahn des Auslegers 30 rechtzeitig herausbewegt.

In der bevorzugten Ausführungsform umfaßt die Folgeventileinrichtung 160 nach Fig. 9 Folgeventile 184 und 186 und Rückschlagventile 188 und 190. Diese sind zwischen den Einlaßstutzen 176 und 178 und den Auslaßöffnungen 162 bis 168 angeordnet. Um den Werkzeugträger aus der Transportstellung aufzufalten, wird das Ventil 170 nach rechts bewegt (Fig. 8), um Druckmittel dem Einlaßstutzen 176 und von dort direkt zu dem Auslaß 164 zu leiten, um die Zylinder 112 einzufahren. Das rückströmende Öl aus den Zylindern 112 gelangt durch das Kugelrückschlagventil 190 zum Einlaßstutzen 178 und dem Sumpf R. Die Zylinder 112 fahren ein, bis der zugehörige Ausleger in die horizontale Bearbeitungsstellung nach Fig. 1 geschwenkt ist. An dem Folgeventil 184 baut sich ein Druck auf, der das Ventil öffnet und die Strömung des Druckmittels zu dem Anschluß 166 und von dort zu dem verankerungsseitigen Ende des Zylinders 48 leitet. Die Zylinder 48 fahren aus, um den Ausleger 30 aus der zusammengefalteten Stellung in die Bearbeitungsstellung auszufalten.

Um den Werkzeugträger von der Bearbeitungsstellung nach Fig. 1 in die Transportstellung nach Fig. 3 zu falten, wird das Ventil 170 nach links (Fig. 8) bewegt, um Druck an den Einlaßstutzen 178 und den Auslaß 168 zu legen und die Verbindung zum Sumpf freizugeben. Die Zylinder 48 fahren ein und schwenken den Trägerausleger 30 umd 180° in die zusammengefaltete Stellung. Die Rückströmung aus dem Zylinder 48 erfolgt über den Einlaßstutzen 176 und durch das Rückschlagventil 188. Wenn der Zylinder 48 voll eingefahren ist, baut sich ein Druck auf, um das Folgeventil 186 zu betätigen und das hydraulische Druckmittel zu dem Anschluß 162 zu leiten, so daß die Zylinder 112 ausfahren und den Trägerausleger 34 über den zuerst eingefalteten Ausleger 30 zusammen falten.

Bei einer alternativen Ausführungsform der Folgeventilanordnung 160a (Fig. 10) wird die Strömung zu den Zylindern 48 und 112 so gesteuert, daß die Ausleger 30 und 34 von der Arbeitsstellung über einen Schwenkwinkel von 5° mit der gleichen Geschwindigkeit und gleichzeitig einschwenken. Danach wird der Ausleger 34 mit einer Geschwindigkeit weiter eingeschwenkt, die kleiner ist als die Schwenkgeschwindigkeit des Auslegers 30, so daß der letztere seine Transportstellung mit Sicherheit zuerst erreicht. Während des Auseinanderfaltens schwenken beide Ausleger mit annähernd gleichen Geschwindigkeiten.

Die Folgeventilanordnung 160a umfaßt Drosseln 192 parallel zu einem Zweistellungsventil 194. Dieses ist zwischen dem Einlaßstutzen 176 und dem Ausschluß 164 vorgesehen. Das Ventil 194 umfaßt eine Betätigungseinrichtung 196, die durch einen Kontaktabschnitt 198 betätigt wird, der sich mit einem der Scharniere 32 oder 36 bewegt. Die Betätigungseinrichtung 196 und der Kontaktabschnitt 198 sind so angeordnet, daß das Ventil 194 sich in der Stellung nach Fig. 10 befindet, in der das Kugelrückschlagventil sich in der Leitung befindet, und zwar immer dann, wenn das Scharnier aus der Bearbeitungsstellung um einen Winkel von mehr als 5° gegenüber der Horizontalen aufwärts geschwenkt worden ist. Zwischen der horizontalen Bearbeitungsstellung und der 5°-Stellung drückt der Kontaktabschnitt 198 das Betätigungsglied 196 so, daß eine freie Strömung durch das Ventil 194 möglich ist.

Wenn sich der Werkzeugträger in der Abstellstellung nach Fig. 3 befindet, kann er aufgefaltet werden, indem Druck an die Anschlüsse 164 und 166 über Ventil 170 und Ventileinrichtung 160a geleitet wird. Das Druckmittel strömt frei von dem Einlaßstutzen 176 direkt zum Auslaßanschluß 166 und von rechts nach links durch das Kugelventil des Ventils 194 zur Auslaßöffnung 164. Die Zylinder 112 werden eingefahren, während die Zylinder 48 ausgefahren werden. Damit können beide Ausleger 30 und 34 mit etwa der gleichen Geschwindigkeit in die Arbeitsstellung geschwenkt werden. In der Arbeitsstellung wird das Betätigungsglied 196 niedergedrückt, so daß die Drosseln 192 umgangen werden. Wenn der Einlaßstutzen 178 durch Betätigung des Betätigungsgliedes des Ventils 170 nach links (Fig. 8) unter Druck gesetzt wird, erfolgt eine Strömung zu den Zylindern durch die Auslässe 162 und 168, während der Rückfluß von den Zylindern frei durch die Anschlüsse 164 und 166 zu dem Einlaßstutzen 176 erfolgen kann. Damit können die Ausleger 30 und 34 zusammenmit etwa der gleichen Geschwindigkeit nach oben geschwenkt werden. Wenn der Ausleger, der mit dem Kontaktabschnitt 198 ausgerüstet ist, ausreichend weit verschwenkt ist, so daß sich das Betätigungsglied 196 ausdehnen kann, wird die Strömung durch das Rückschlagventil in dem Ventil 194 bestimmt, so daß der Rückfluß aus den Zylindern 112 durch die Drosseln 192 gehen muß. Die Ausfahrgeschwindigkeit der Zylinder 112 wird dadurch herabgesetzt in bezug auf die Einfahrgeschwindigkeit der Zylinder 48. Das bedeutet, daß der rechte Ausleger 30 die 180°-Klappstellung vor dem linken Ausleger 34 erreicht. Im hügeligen Gelände ist das Wenden mit dem Werkzeugträger in der Arbeitsstellung dadurch erleichtert, daß die Ausleger gemeinsam während eines kleinen Anfangsabschnittes der Einfaltbewegung verschwenkt werden können.

## Patentansprüche

1. Zusammenfaltbares und auffaltbares Gerät oder Werkzeugträger für landwirtschaftliche Maschinen mit einem horizontal und quer zur Fahrtrichtung angeordneten Trägerhauptabschnitt (12) für Werkzeuge, an dessen Enden im Abstand oberhalb der den Trägerhauptabschnitt enthaltenden horizontalen Ebene horizontale Schwenkachsen (42,90) und jeweils zwischen einer ausgeschwenkten Arbeitsstellung und einer demgegenüber um mehr als 90° geschwenkten Transportstellung über dem Trägerhauptschnitt (12) bowegbare Trägerausleger (30,34) mit daran befestigten Werkzeugen vorgesehen sind, deren Gesamtbreite größer ist als die Breite des Trägerhauptabschnittes, und bei dem Schwenkantriebe (48,112) jeweils zwischen dem Trägerhauptabschnitt und jedem Trägerausleger vorgesehen sind, dadurch gekennzeichnet, daß in der Transportstellung die beiden Trägerausleger (30,34) mit jeweils nach oben weisenden Werkzeugen übereinander in etwa paralleler Position zueinander und zu dem Trägerhauptabschnitt (12) angeordnet sind, daß der Schwenkantrieb (36,112) für den einen Trägerausleger (34) so ausgebildet ist, daß er diesen Trägerausleger (34) während des Bewegens in die Transportstellung über die nach oben weisenden Werkzeuge (140) des anderen Trägerauslegers (30) hebt, und daß seine Schwenkachse (90) um einen vorbestimmten vertikalen Abstand über einer die Schwenkachse (42) des anderen Trägerauslegers (30) enthaltenden horizontalen Ebene angeordnet ist, wobei der Abstand ($d_2$) der Schwenkachse (90) von der Ebene des Trägerhauptabschnittes (12) wenigstens gleich der Hälfte des Abstandes ($d_1$) ist, in dem sich in der Transportstellung die Werkzeugspitzen des andercn Auslegers (30) über der Ebene des Trägerhauptabschnittes (12) befinden.

2. Zusammenfaltbares und auffaltbares Gerät oder Werkzeugträger nach Anspruch 1, dadurch gekennzeichnet, daß dem Schwenkantrieb (36,112) für den Trägerausleger (34) mit der höher liegenden Schwenkachse (90) ein Schwenkgestänge mit einer Verbindungsstänge (122) zugeordnet ist, die mit einem Ende an einem in der Arbeitsstellung des Auslegers nach oben ragenden Arm (86) des Trägerauslegers (34) und mit dem anderen Ende an dem zugewandten Ende (116) eines Druckmittelzylinders (112) angelenkt ist, und daß eine Führung (54,56) vorgesehen ist, mittels der das mit der Verbindungsstange (122) verbundene Ende des Druckmittelzylinders (112) in Abhängigkeit vom Ausfahren diescs Zylinders zwangsweise anhebbar ist.

3. Werkzeugträger nach Anspruch 1 oder 2, bei dem die Trägerausleger (30,34) in der Arbeitsstellung nach unten ragende Bodenbearbeitungs- oder Bodenberührungswerkzeuge aufweisen, dadurch gekennzeichnet, daß die höher liegende Schwenkachse (90) so angeordnet ist, daß der zugehörige Trägerausleger (34) in der Transportstellung etwa parallel zum Trägerhauptabschnitt (12) über den Werkzeugen (140) des anderen Trägerauslegers (30) liegt.

4. Werkzeugträger nach einem oder mehreren der Ansprüche 1 bis 3, dadurch gekennzeichnet, daß die kombinierte Arbeitsbreite der beiden Trägerausleger (30,34) - wie an sich bekannt - größer als die Arbeitsbreite des Trägerhauptabschnittes (12) ist.

5. Werkzeugträger nach Anspruch 3, dadurch gekennzeichnet, daß der vertikale Abstand zwischen der den Trägerhauptabschnitt (12) und der die höher liegende Schwenkachse (90) enthaltenden horizontalen Ebenen größer als etwa die Hälfte des Wertes der Erstreckung der Werkzeuge (140) und/oder Bodenkontakträder (142) des anderen Trägerauslegers (30) in der Transportstellung über die den Trägerhauptabschnitt (12) enthaltende Ebene ist.

6. Werkzeugträger nach einem oder mehreren der Ansprüche 1 bis 5 mit doppelt wirkenden hydraulischen Schwenkzylindern (48,112) für die beiden Trägerausleger, einer Druckmittelquelle und einem hydraulischen Steuerkreis (160), dadurch gekennzeichnet, daß der hydraulische Steuerkreis (160) so ausgebildet ist, daß beim Einschwenken in die Transportstellung zuerst der Trägerausleger (30) mit der niedriger liegenden Schwenkachse (42) und beim Ausschwenken in die Arbeitsstellung zuerst der Trägerausleger (34) mit der höher liegenden Schwenkachse (90) verschwenkt wird, ehe der andere Trägerausleger verschwenkbar ist.

7. Werkzeugträger nach Anspruch 6, dadurch gekennzeichnet, daß der hydraulische Steuerkreis (160) derart ausgebildet ist, daß über einen ersten, an die Arbeitsstellung anschließenden Schwenkwinkel beide Trägerausleger (30,34) gemeinsam schwenkbar sind.

8. Werkzeugträger nach einem oder mehreren der Ansprüche 1 bis 7, dadurch gekennzeichnet, daß den Transportstellungen der beiden Trägerausleger (30,34) jeweils die einwärts gerichtete Schwenkbewegung begrenzende Anschläge (52,139) zugeordnet sind.

9. Werkzeugträger nach Anspruch 8, dadurch gekennzeichnet, daß ein Anschlag (52) für den in der Transportstellung unmittelbar über dem Trägerhauptabschnitt (12) liegenden Trägerausleger (30) am Trägerhauptabschnitt und der Anschlag (139) für den anderen Trägerausleger (34) an diesem starr angeordnet sind, wobei der letztere Anschlag (139) einen Abschnitt zur Anlage an dem darunter liegenden Trägerausleger (30) aufweist.

## Claims

1. An implement or tool carrier which can be folded together and folded up, for agricultural machines, ccmprising a main oarrier section (12) for tools, which is arranged horizontally and transversely with respect to the direction of travel, wherein provided at the ends of the main carrier section (12) and at a spacing above the horizontal plane containing the main oarrier section are horizontal pivot axes (42, 90) and respective carrier extensions (30, 34) which are movable between an outwardly pivoted working position and a transportation position above the main carrier section (12), in which the carrier extensions are respectively pivoted through more than 90° relative to the working position, the carrier extensions having tools secured thereto and the overall width thereof being greater than the width of the main carrier section, and in which there are provided respective pivotal drive means (48, 112) between the main carrier section and each carrier extension, characterised in that in the transportation position the two carrier extensions (30, 34) are arranged with their respective tools facing upwardly, in superposed relationship and in a substantially parallel position relative to each other and relative to the main carrier section (12), that the pivotal drive means (36, 112) for the one carrier extension (34) is such that, during the movement into the transportation position, it lifts that carrier extension (34) over the upwardly facing tools (140) of the other carrier extension (30), and that its pivot axis (90) is arranged at a predetermined vertical spacing above a horizontal plane containing the pivot axis (42) of the other carrier extension (30), wherein the spacing (d2) of the pivot axis (90) from the plane of the main carrier section (12) is at least equal to half the spacing (d$_1$) at which, in the transportation position, the tips of the tools of the other extension (30) are disposed above the plane of the main carrier section (12).

2. An implement or tool carrier which can be folded together and folded up, according to claim 1 characterised in that associated with the pivotal drive means (36, 112) for the oarrier extension (34) which has the pivot axis (90) at the higher level is a pivoting linkage comprising a connecting rod (122) which is connected at one end to an arm (86) on the carrier extension (34), said arm projecting upwardly in the working position of the extension, while at its other end it is connected to the end (116), which is theretowards, of a pressure fluid cylinder (112), and that there is provided a guide (54, 56) by means of which the end of the pressure fluid cylinder (112) which is connected to the connecting rod (122) can be positively lifted in dependence on extension of said cylinder.

3. A tool carrier according to claim 1 or claim 2 wherein the carrier extensions (30, 34) have cultivation or ground-contacting tools which project downwardly in the working position characterised in that the pivot axis (90) which is disposed at the higher level is so arranged that in the transportation position the associated carrier extension (34) is disposed substantially parallel to the main carrier section (12) above the tools (140) of the other carrier extension (30).

4. A tool carrier according to one or more of claims 1 to 3 characterised in that the combined working width of the two carrier extensions (30, 34), is greater than the working width of the main carrier section (12), as is known per se.

5. A tool carrier according to claim 3 characterised in that the vertical spacing between the horizontal planes containing the main carrier section (12) and the pivot axis (90) that is at a higher level is greater than approximately half the distance over which the tools (140) and/or ground-contacting wheels (142) of the other carrier extension (30) extend, in the transportation position, above the plane containing the main carrier section (12).

6. A tool carrier according to one or more of claims 1 to 5 comprising double-acting hydraulic pivoting cylinders (48, 112) for the two carrier extensions, a pressure fluid source and a hydraulic control circuit (160) characterised in that the hydraulic control circuit (160) is such that, upon pivotal movement into the transportation position, it is firstly the carrier extension (30) with the pivot axis (42) at the lower level, that is pivoted before the other carrier extension can be pivoted, while upon outward pivotal movement into the working position, it is firstly the carrier extension (34) with the pivot axis (90) at the higher level that is pivoted before the other carrier extension can be pivoted.

7. A tool carrier according to claim 6 characterised in that the hydraulic circuit (160) is such that both carrier extensions (30, 34) are jointly pivotable over a first pivotal angle adjoining the working position.

8. A tool carrier according to one or more of claims 1 to 7 characterised in that associated with the transportation positions of the two carrier extensions (30, 34) are respective abutments (52, 139) for limiting the inwardly directed pivotal movement.

9. A tool carrier according to claim 8 characterised in that an abutment (52) for the oarrier extension (30) which in the transportation position is disposed directly above the main carrier section (12) is rigidly arranged on the main carrier section and the abutment (139) for the other carrier extension (34) is arranged rigidly thereon, wherein the latter abutment (139) has a portion for bearing against the subjacent carrier extension (30).

**Revendications**

1.- Instrument ou châssis porte-outils repliable et dépliable pour machines agricoles, comportant une poutre porteuse pri..cipale (12) disposée horizontalement et transversalement au sens de la marche, destinée à des outils, aux extrémités de laquelle il est prévu, à une certaine distance au-dessus du plan horizontal contenant la poutre porteuse principale, des axes de pivotement horizontaux (42, 90) et des châssis porteurs latéraux (30, 34) sur lesquels sont fixés des outils, déplaçables entre une position de travail dépliée ou sortie et une position de transport atteinte par pivotement d'un angle supérieur à 90° par rapport à la position précédente et située au-dessus de la poutre porteuse principale (12), la largeur totale de ces châssis étant supérieure à la largeur de la poutre porteuse principale, et dans lequel des dispositifs de pivotement (48, 112) sont prévus chaque fois entre la poutre porteuse principale et chaque châssis porteur, caractérisé en ce que, dans la position de transport, les deux châssis porteurs (30, 34) se trouvent dans des positions parallèles entre elles et à la poutre porteuse principale (12) et superposées, les outils étant dirigés vers le haut, en ce que le dispositif de pivotement (36, 112) prévu pour l'un des châssis porteurs est agencé de telle sorte que, pendant le déplacement jusque dans la position de transport, il soulève ce châssis porteur (34) au-dessus des outils (140) dirigés vers le haut de l'autre châssis porteur (30), et en ce que son axe de pivotement (90) est disposé selon un écartement vertical prédéterminé au-dessus d'un plan horizontal contenant l'axe de pivotement (42) de l'autre châssis porteur (30), l'écartement ($d_2$) entre l'axe de pivotement (90) et le plan de la poutre porteuse principale (12) étant au moins égal à la moitié de l'écartement ($d_1$) que présentent, dans la position de transport, les pointes des outils de l'autre châssis porteur (30) au-dessus du plan de la poutre porteuse principale (12).

2.- Instrument ou châssis porte-outils repliable et dépliable suivant la revendication 1, caractérisé en ce qu'il est prévu, en combinaison avec le dispositif de pivotement (36, 112) pour le châssis porteur (34) dont l'axe de pivotement (90) est situé le plus haut, une timonerie de pivotement comprenant une bielle de liaison (122) qui est reliée à articulation par une extrémité à un bras (86) du châssis porteur (34) faisant saillie vers le haut dans la position de travail de ce châssis porteur, et par son autre extrémité à l'extrémité (116) dirigée vers elle d'un cylindre ou vérin à fluide sous pression (112), et ce qu'il est prévu un guide (54, 56) au moyen duquel l'extrémité du vérin à fluide sous pression (112) reliée à la bielle de liaison (122) peut être relevée de façon positive en fonction de la sortie de ce vérin.

3.- Châssis porte-outils suivant la revendication 1 ou 2, dans lequel les châssis porteurs (30, 34) comprennent des outils de travail du sol ou venant en contact avec le sol s'étendant vers le bas dans la position de travail de ces bras, caractérisé en ce que l'axe de pivotement (90) situé le plus haut est disposé de telle sorte que le châssis porteur conjugué (34) s'étende, dans la position de transport, en principe parall élément à la poutre porteuse principale (12), au-dessus des outils (140) ou analogues de l'autre châssis porteur (30).

4.- Châssis porte-outils suivant une ou plusieurs des revendicàtions 1 à 3, caractérisé en ce que la largeur combinée des deux châssis porteurs (30, 34) est, d'une manière en soi connue, supérieure à la largeur de travail de la poutre porteuse principale (12).

5.- Châssis porte-outils suivant la revendication 3, caractérisé en ce que la distance verticale entre les plans horizontaux contenant la poutre porteuse principale (12) et l'axe de pivotement (90) situé le plus haut est supérieure à la moitié environ de l'étendue des outils (140) et/ou des roues de contact avec le sol (142) de l'autre châssis porteur (30) au-dessus du plan contenant la poutre porteuse principale (12) dans la position de transport.

6.- Châssis porte-outils suivant une ou plusieurs des revendications 1 à 5, comprenant des vérins de pivotement hydrauliques à double effet (48, 112) pour les deux châssis proteurs, une source de fluide sous pression et un circuit de commande hydraulique (160), caractérisé en ce que le circuit de commande hydraulique (160) est agencé de telle sorte que, lors du pivotement vers l'intérieur jusque dans la position de transport, le châssis porteur (30) conjugué à l'axe de pivotement (42) situé le plus bas soit déplacé en premier, tandis que lors du pivotement vers l'extérieur jusque dans la position de travail, le châssis porteur (34) conjugué à l'axe de pivotement (90) situé le plus haut est déplacé en premier, avant que l'autre châssis porteur puisse pivoter.

7.- Châssis porte-outils suivant la revendication 6, caractérisé en ce que le circuit de commande hydraulique (160) est agencé de telle sorte que les deux châssis porteurs (30, 34) puissent pivoter conjointement sur un premier angle de pivotement au voisinage de la position de travail.

8.- Châssis porte-outils suivant une ou plusieurs des revendications 1 à 7, caractérisé en ce que des butées (52, 139) limitant chaque fois le mouvement de pivotement dirigé vers l'intérieur sont conjuguées aux positions de transport des deux châssis porteurs (30, 34).

9.- Châssis porte-outils suivant la revendication 8, caractérisé en ce qu'une butée (52) destinée au châssis porteur (30) qui se trouve, dans la position de transport, directement au-dessus de la poutre principale (12) est fixée rigidement sur cette poutre porteuse principale, et en ce que la butée (139) destinée à l'autre châssis porteur (34) est fixée rigidement sur ce châssis porteur, cette dernière butée (139) présentant une partie venant s'appliquer contre le châssis porteur (30) situé au-dessous.

FIG. 1

FIG. 2

056 118

## FIG. 3

## FIG. 4

FIG. 5

FIG. 7

FIG. 6

4/4

FIG. 8

SEQUENCE VALVE ASSEMBLY

FIG. 9

FIG. 10